Europäisches Patentamt

**European Patent Office**

**Office européen des brevets**

(11) Publication number: **0 060 091**
**A2**

# (12) EUROPEAN PATENT APPLICATION

(21) Application number: **82301101.0**

(22) Date of filing: **04.03.82**

(51) Int. Cl.³: **B 01 D 13/02**
**C 25 D 21/20, C 02 F 1/46**

(30) Priority: **06.03.81 US 241424**
**06.03.81 US 241038**

(43) Date of publication of application:
**15.09.82 Bulletin 82/37**

(84) Designated Contracting States:
**AT BE CH DE FR GB IT LI LU NL SE**

(71) Applicant: **INNOVA, INC.**
**5170 126th Avenue North**
**Clearwater, FL 33520(US)**

(72) Inventor: **Ryder, George A., Jr.**
**8424 118th Street North**
**Seminole Florida(US)**

(72) Inventor: **Rowe, Paul W.**
**296 Lake Joyce Drive**
**Land O'Lakes Florida 33539(US)**

(74) Representative: **Paget, Hugh Charles Edward et al,**
**MEWBURN ELLIS & CO. 2/3 Cursitor Street**
**London EC4A 1BQ(GB)**

(54) **Apparatus and method for electrolytically treating an ion containing liquid such as chromium plating rinse water.**

(57) A method and apparatus are provided especially adapted for electrolytically treating chromium plating rinse water to recover hexavalent chromium in recycled rinse water in an economical and efficient manner. The invention may also be practiced in a wide variety of other treatment systems, such as for the recovery of nickel and other metals from their respective rinses and the like. A plurality of integral electrolytic cell structures (30), including ion transfer membranes (31) with electrodes (33, 36) inside and outside the membranes, and with a chimney (45) extending upwardly from the membranes, are provided in a tank (25) distinct from a plating operation rinse tanks. Rinse water is passed into the tank around the electrolytic cell structures with ions from the liquid passing through the membranes into interior volumes defined by the membranes. Air is introduced into the tank (by spargers 64) to maximize efficient ion transfer at the membranes. The tank (25) is provided above the rinse water tanks (10-13) and the inlet (27) and outlet (28) are arranged to prevent draining of the purifying tank into the rinse water tanks should a malfunction occur. The electrolytic cell assemblies are designed to have a minimum of parts, to facilitate removal of electrolytes without interrupting operation, and to facilitate cool operation.

Croydon Printing Company Ltd.

./...

*Fig.6*

APPARATUS AND METHOD FOR ELECTROLYTICALLY TREATING
AN ION CONTAINING LIQUID, SUCH AS CHROMIUM PLATING RINSE WATER

The invention relates to a method and apparatus particularly adapted for recovering hexavalent chromium and recycling rinse water in chromium plating operation. Utilizing the invention it is possible to eliminate normal discharges from chromium plating operations so that all environmental regulations with respect to waste discharge can be met, and so that valuable hexavalent chromium is not lost in the waste system. While the method and apparatus according to the invention are ideally suited for chromium plating systems, they are equally capable of performing a wide variety of other functions such as the recovery of nickel and other metals from their respective rinses.

The method and apparatus according to the invention are practiced utilizing an electrolytic system including an ion transfer membrane. The ion transfer membrane preferably is of the type disclosed in U.S. patent 4,242,193. The membrane comprises a metal anion permeable, non-ionic, semi-permeable, non-permselective membrane, having no membrane potential and capable of providing passage of anions thereacross over extended operation without destructive swelling, clogging, chemical reaction, or consumption thereof. The membrane preferably comprises a plurality of layers of capillary material maintained under compression.

An integral electrolytic cell assembly according to the present invention includes the ion transfer membrane disposed in a configuration defining an interior volume, such as in the configuration of a membrane block with a generally cylindrical vertically extending open-top opening formed in the block. A first electrode, usually the anode, is disposed within the volume defined by the membrane, preferably being freely removably mounted so that it extends through the open-top of the interior volume of the membrane into the interior volume. A second, freely liquid permeable electrode, normally the cathode, surrounds the membrane exteriorly thereof. The cathode preferably is in the form of a metal lattice which is mounted closely adjacent, but spaced from, the membrane. Because of the high ion concentration gradient between opposite sides of the membrane, efficient membrane operation is essential in order to obtain the desired economical recovery and treatment results according to the invention.

Efficient operation of the cell assemblies according to the invention is provided by providing a chimney extending upwardly from the open-top of the membrane interior volume in a sealed relationship therewith for facilitating cooling of the cell. The chimney also facilitates removal of electrolyte from the volume defined by the membrane without interrupting operation of the cell. Further, during placement of the membranes in a purifying tank through which rinse water is circulated, air is bubbled through the tank to effect agitation and cooling of the liquid so that no layering of the liquid adjacent the membrane takes place, and to facilitate cooling, to thereby maximize efficient ion transfer.

Whenever the anolyte concentration is too dilute, an osmotic head is pumped up inside the chimney. Dilution of anolyte concentration usually occurs right after the time of anolyte removal. This can result in the electrolytic cell effectively being ineffective for several hours after anolyte removal. However, by minimizing the volume of the head (while not the extent of the head) in the chimney it is possible to utilize electrolytic cells so that they have only reduced efficiency for one or two hours after anolyte removal. This is accomplished according to the invention by providing an insert in the top of the chimney having a plurality of grooves formed therein, the insert restricting the volume of the chimney so that it is less than the capillary volume of the membrane. The insert also serves as an electrode holder, and the grooves are formed adjacent the electrodes to allow the passage of gas from the interior volume of the membrane to the atmosphere. The cooling effected by the chimney is provided by a combined effect of the released gases carrying hot liquid from the membrane up into the chimney, and then the cooled liquid in the chimney going down into the cell to replace it. Cooling of the liquid in the chimney may be facilitated by providing fins thereon, etcetera. The bottom of the insert is beveled so that no gas pockets can form, and an opening is provided in the insert adjacent one wall of the chimney for holding a rigid tube that extends into the chimney and is connected to an aspirator system for effecting anolyte removal.

The aspirator system provides means for periodically withdrawing from the membrane interior volumes concentrated ion solution, without interrupting the operation of the apparatus. A rigid (e.g. glass) tube is disposed in operative communication with each membrane interior volume, and connecting means are provided for connecting the tubes to a common header. The aspirator system is connected from the header to a container for concentrated ion solution withdrawn from the membrane interior volumes. The aspirator system itself comprises a first conduit leading from the header to the container top portion, a venturi, a second conduit leading from the container top portion to the venturi and positioned with respect to the venturi so that when liquid flows through the venturi a suction is drawn on the second conduit. The container is substantially air-tight except for a small opening in a top portion thereof.

Preferably the tank inlet comprises an inlet pipe and a branch pipe extending from the inlet pipe and discharging into the tank. A valve is disposed in the branch pipe for providing selective passage of liquid from the inlet pipe to the branch pipe, with the venturi disposed in the branch pipe. An operator can initiate operation of the aspirator system merely by covering the small opening in the container top portion after opening of the valve to supply water to the venturi. The venturi will then draw a vacuum on the container and after the container is evacuated the withdrawal of concentrated ion solution from the interior volumes of the membranes will continue until the tubes within the interior volumes are no longer in contact with liquid and start drawing air. At this time the siphoning effect (the tank being located above the container) from the tank to the container is broken so that further withdrawal automatically ceases. In any subsequent time, then, the valve to the branch pipe may be closed.

According to the present invention a method of recovering hexavalent chromium and recycling rinse water in a chromium plating system is provided which is advantageous compared to prior systems, being capable of meeting applicable federal environmental requirements, and providing chromium recovery in an efficient and cost-effective manner. In a conventional chromium plating system there is provided a chromium bath and a plurality of rinse tanks including a first rinse tank of lowest chromium concentration, and subsequent rinse tanks of progressively higher chromium concentration between that of the first rinse tank and the chromium bath. Rinse water is withdrawn from the first tank, the rinse water is electrolytically treated to remove hexavalent chromium therefrom and concentrate the removal of chromium for recovery, the treated rinse water is returned to the first rinse tank, and make-up water for evaporation of water in the system is periodically added by running fresh water into the first rinse tank, circulating water from the first rinse tank to a subsequent rinse tank without backflow, and circulating water from a subsequent rinse tank having the highest concentration of chromium to the chromium bath without backflow.

The invention also comprises an integral electrolytic cell assembly including an ion transfer membrane, first electrode, means for mounting the first electrode so that it is disposed within a volume defined by the membrane, a second, freely liquid permeable, electrode, means for mounting the second electrode so that it surrounds the membrane exteriorly thereof, and means for facilitating removal of electrolyte from the volume defined by the membrane without interrupting operation of the cell, and facilitating cooling of the cell. A chimney extending upwardly from the open-top of the membrane interior volume preferably comprises the electrolytic removal and cooling facilitating means, and a head volume restricting means is disposed in the chimney. With the head volume restriction means, after anolyte removal the cell assembly will work with reduced efficiency for about one to two hours, however without the head volume restriction the cell may effectively be ineffective for six hours after anolyte removal. A plurality of electrode segments, preferably anode segments, are mounted by the insert. The other electrode, preferably the cathode is wrapped around the exterior of the membrane in close proximity to, but spaced, therefrom. Compression rods which exert a compression force on a pair of opposed plates tending to hold the membrane together, are also disposed around the periphery of the membrane, and the cathode is bent around these compression rods. Hold rods are provided between the compression rods for preventing exaggerated outward movement of the cathode.

It is the primary object of the subject invention to provide an apparatus, and cell assembly components thereof, and a method, for electrically treating an ion containing liquid to remove ions from the liquid and concentrate them, particularly for removal and concentration of hexavalent chromium.

Embodiments of the invention are described below by way of example with reference to the drawings:-

FIGURES 1 through 3 are schematic illustrations of three exemplary systems for utilization and practice of exemplary apparatus and methods according to the present invention;

FIGURE 4 is a front view of all assembled components of an exemplary apparatus according to the present invention;

FIGURE 5 is a perspective view of an exemplary cell assembly according to the present invention;

FIGURE 6 is an exploded perspective view of the cell assembly of FIGURE 5;

FIGURE 7 is a side schematic view illustrating an exemplary aspirator system, in association with a cell assembly, for practice of the invention;

FIGURE 8 is a side schematic cross-sectional view of an exemplary purifying tank and associated structure according to the present invention, with the cell assemblies in particular shown schematically; and

FIGURE 9 is a top plan view of the apparatus of FIGURE 8.

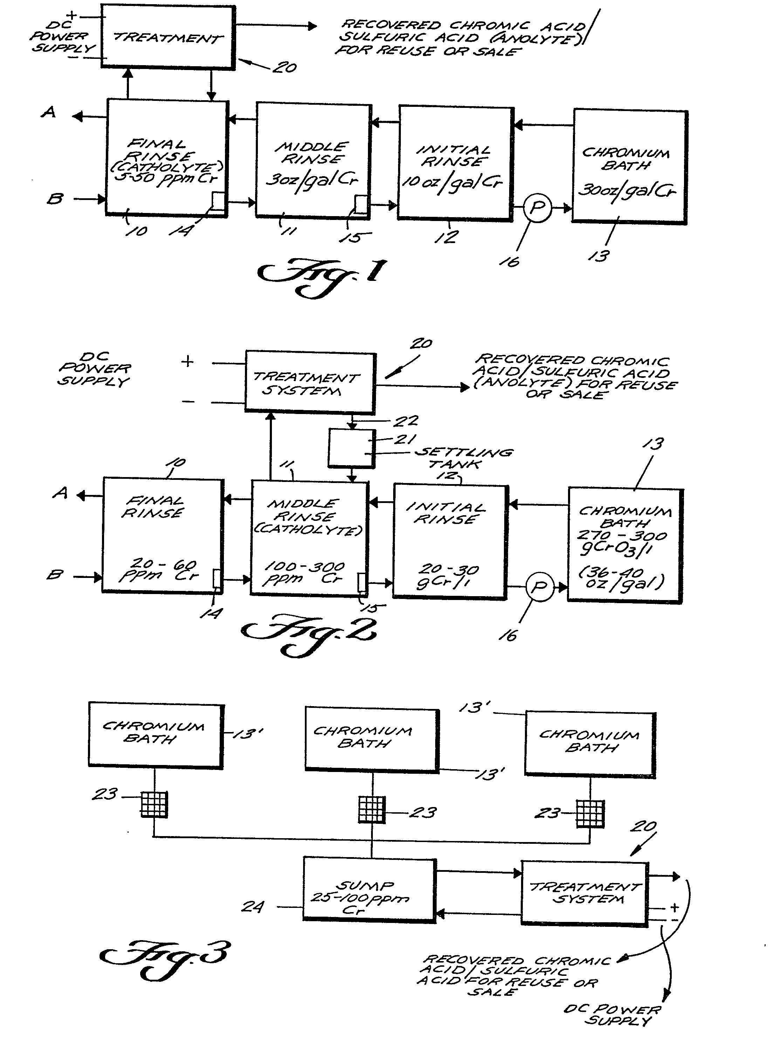

The bottom portion of FIGURE 1 illustrates a conventional three-rinse chrome plating system wherein first, second, and third rinse tanks 10, 11, and 12 respectively are disposed adjacent a chromium bath 13. The average concentrations of chromium in each of the rinses and the chromium bath are indicated in FIGURE 1. The first and second rinse tanks include weir boxes 14, 15, while a manually actuated pump 16 is disposed between the third rinse tank 12 and the chromium bath 13. The parts flow is in the direction of arrow A, while the evaporation make-up water flow is the direction of arrow B.

Conventional chromium rinse treatment and/or chromium concentration apparatus, such as an evaporator, is disposed in operative association with the third rinse tank 12, the one with the highest percentage of chromium. This provides little flexibility in the system, and can also have further drawbacks. According to the present invention, however, it is possible to act on any of the rinse tanks 10 through 12. It is especially desirable to act on the first rinse tank 10, having the lowest chromium concentration, to facilitate accurate maintenance of desired chromium concentrations in the various rinse tanks during introduction and flow of evaporation make-up water.

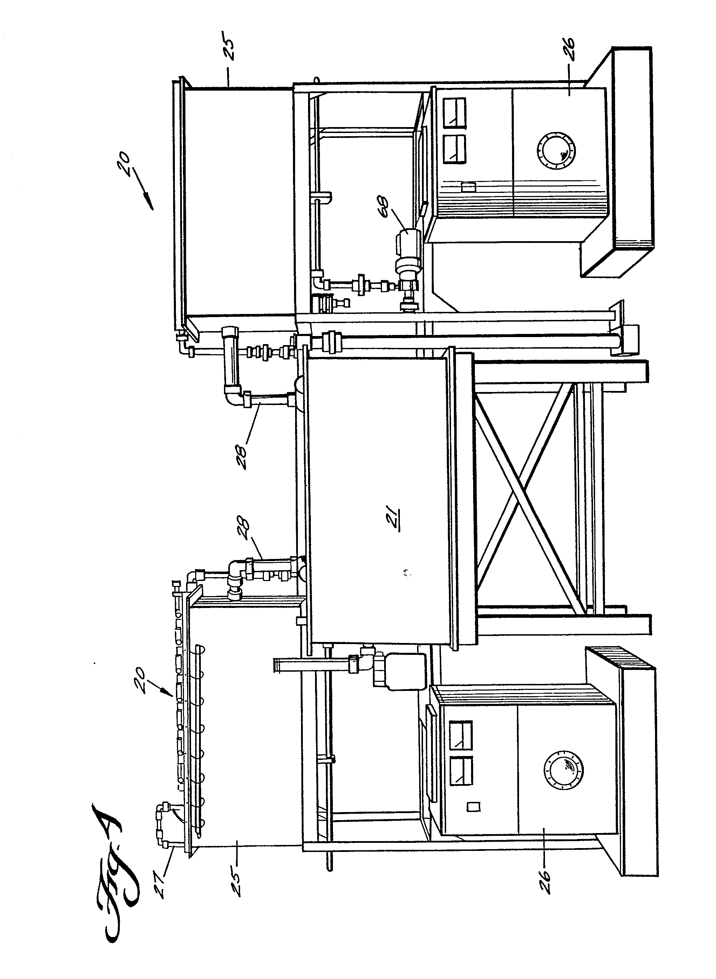

FIGURE 2 is substantially the same as FIGURE 1 only indicating slightly different chromium concentrations in the various tanks, and illustrating an exemplary treatment system 20 according to the present invention in association with the middle rinse tank 11. Also, in this embodiment a settling tank 21 is provided in the return line 22 from the treatment system 20 to the second rinse tank 11.

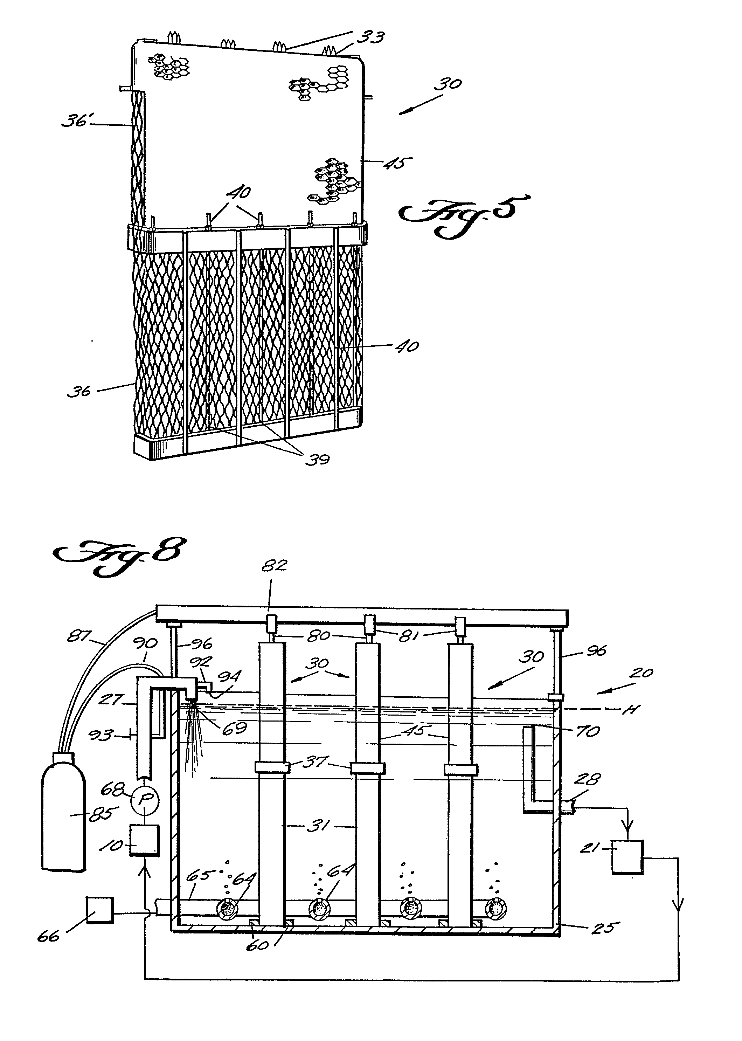

In the system illustrated in FIGURE 3, multiple plating tanks 13' are provided with no separate rinses. Instead rinsing liquid from a common sump 24 is sprayed over floor gratings 23 and drains to the common sump 24, a treatment system 20 according to the present invention being provided in association with the sump 24.

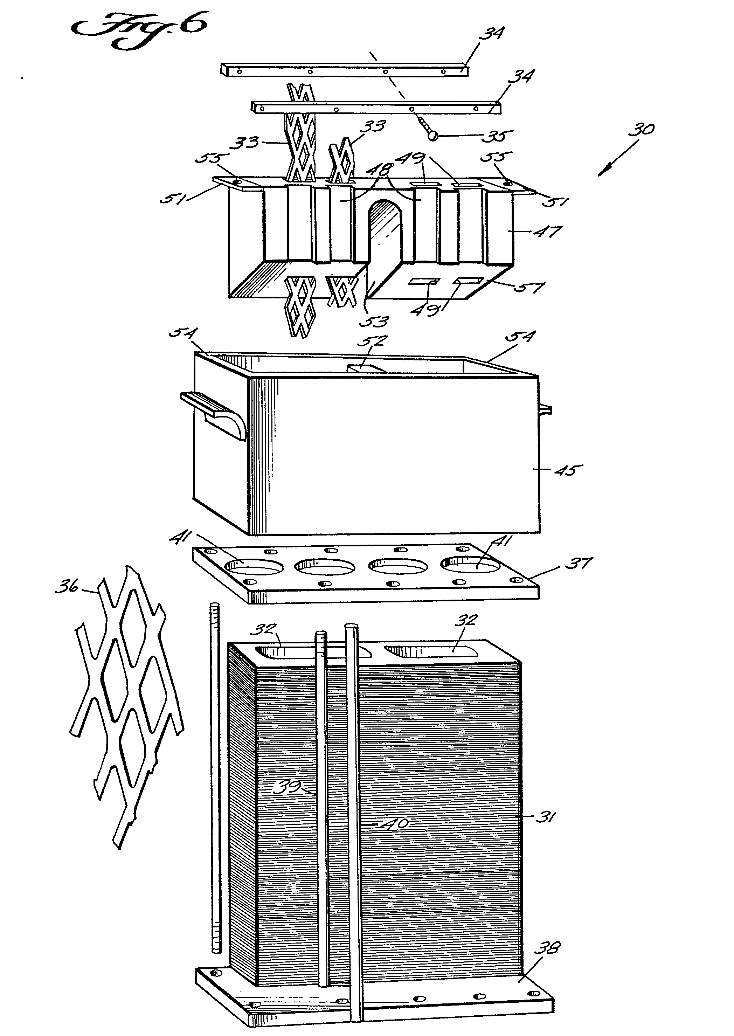

An exemplary apparatus according to the present invention is illustrated in FIGURE 4. The apparatus in FIGURE 4 is illustrated with two different purifying tanks 25, rectifier power supplies 26, etcetera, and with a common settling tank 21. However one advantage of the present invention is that each system may be custom engineered to minimize floor space, differing numbers of cell assemblies being provided depending upon the particular requirements. The apparatus according to the invention will include a purifying tank 25 which is provided in association with a rinse tank (10 through 12) or the like including having an inlet 27 from the rinse tank, and an outlet 28 leading through the settling tank 21 to the rinse tank.

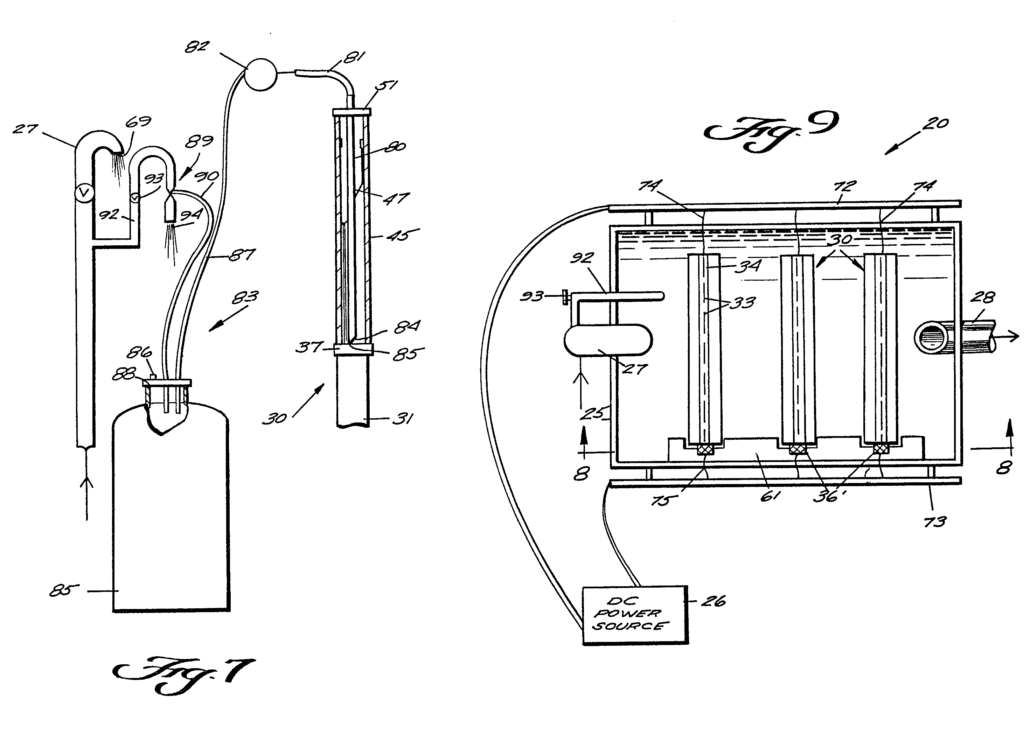

An exemplary cell assembly according to the present invention, and for utilization with a plurality of other cell assemblies in the apparatus of FIGURE 4, is illustrated generally at 30 in FIGURES 5 and 6. The integral electrolytic cell assembly includes an ion transfer membrane 31 disposed in a configuration defining a generally cylindrical open-top interior volume(s) 32. The membrane 31 preferably comprises a metal anion permeable, non-ionic, semi-permeable, non-permselective membrane having no membrane potential and capable of providing/for anions thereacross over extended operation without destructive swelling, clogging, chemical reaction, or consumption thereof. Such exemplary membranes are described in U.S. patent 4,242,193. In the exemplary embodiment illustrated in the drawings, the membrane comprises an ion transfer membrane block comprising a plurality of layers of capillary material, with the opening 32 formed by openings in each layer of the block in registry with each other.

The electrolytic cell assembly 30 further comprises a first electrode 33 and means for mounting the first electrode so that it is disposed within the volume 32. The first electrode 33 preferably is hooked-up to a power source (e.g. 26) so that it comprises the anode. Preferably the first electrode 33 comprises a plurality of distinct, electrically connected electrode elements (see FIGURE 6), with the electrode mounting means mounting a plurality of the electrode elements in each of the membrane interior volumes 32 (e.g. two elements 33 in each of the chambers 32). The first electrode holding means may include a pair of metal bars 34 which receive the electrode elements 33 therebetween, screws 35 or like fasteners being provided to hold the bars 34 together clamping the first electrode elements 33.

The cell assembly 30 also preferably comprises a second, freely liquid permeable, electrode 36. The second electrode preferably is connected up to a DC power source (e.g. 26) so that it forms the cathode. While the second electrode 36 may take a wide variety of forms, the preferred form, illustrated in the drawings, is a metal latticework, such as expanded metal. A wide variety of materials may be utilized for the electrodes 33, 36, such as platinum coated or clad columbium or titanium.

The cell assembly 30 further comprises means for mounting the second electrode so that it surrounds the membrane 31 exteriorly thereof, in close proximity therewith. In the preferred embodiment illustrated in the drawings, compression blocks 37, 38 are provided on top of and on the bottom of the layered integral membrane block 31 to compress the layers. Compressive forces are provided by tightening down compression rods 39 utilizing nuts 40' (see FIGURE 5). The cathode lattice 36 is wrapped around the rods 39, bent into contact therewith, and extends between the rods 39 spaced about 1/8 inch from the membrane 31 exterior surface. In order to prevent too much separation of the cathode 36 from its position in close proximity to the membrane 31, a plurality of holding rods 40, disposed exteriorly of the lattice 36, are provided, the rods 40 also extending between the blocks 37, 38. A portion 36' of the cathode 36 extends upwardly from the area of the membrane 31 to a point for convenient connection to a power supply during use of the cell assembly 30 (see FIGURE 9).

The bottom membrane block 38 is solid, except for the screwed openings formed therein for receipt of the compression rods 39 and holding rods 40, while the top compression block 37 has a plurality of openings 41 formed therein, the openings 41 being in registry with the membrane openings 32. For strength, preferably two openings 41 are provided in the compression block 37 for each opening 32. Further bores are provided in the upper compression block 37 for passage of the threaded ends of rods 39 therethrough, and for positioning the holding rods 40.

The assembly 30 further comprises a chimney 45. The chimney 45 extends upwardly from the membrane 31 coincident with the interior volumes 32 and in sealed relationship therewith. The chimney 45 comprises means for facilitating removal of electrolyte (anolyte) from the volumes 32 without interruption of the cell operation, and for facilitating cooling of the cell, particularly membrane 31. These actions maximize efficient ion transfer across the membrane 31. The cooling effected by the chimney is provided by a combined efect of the released gases from the anode 33 carrying hot liquid from the membrane 31 into the chimney 45, and then the colder liquid in the chimney going down into the membrane 31 to replace the hot liquid. In operation, the chimney 45 is substantially immersed in an agitated liquid which cools the electrolyte within the chimney 45. Fins, or like heat-dissipation facilitating structures, may be provided on the chimney 45 to maximize its electrolyte cooling action.

In order to prevent undue depletion of concentrated electrolyte in the cell, and thereby minimize reduced efficiency of the cell after anolyte removal, means are provided for restricting the volume of an electrolytic head to be established in the chimney during use of the assembly so that the head volume is less than the capillary volume of the membrane. The head volume restricting means also preferably comprises part of the means for mounting the first electrode 33, and preferably takes the form of an insert 47 (see FIGURE 6). The insert 47 is formed of material resistant to attack in the cell environment, and may be formed as an integral structure, as several pieces joined together, etcetera. In the preferred embodiment illustrated in the drawings, the insert 47 has means defining at least one upwardly extending opening (slot) 48 therein extending from the bottom to the top thereof so that liquid in the chimney may rise in the opening 48. Liquid rising in the opening 48 can establish the necessary head, however the volume of the head is greatly reduced since the insert 47 occupies the bulk of the volume in that portion of the chimney 45 on which it is disposed. In one exemplary embodiment, the insert 47 may take up four-fifths of the volume of the chimney 45 in that portion of the chimney on which it is disposed.

The insert 47 further comprises means defining at least one through-extending passageway 49 therein, which passageway 49 receives first electrode 33. For instance, with respect to FIGURE 6, where four anode elements 33 are provided, a passageway 49 is provided for each element 33, allowing free passage of the element 33 through the insert 47. Preferably the slots 48 are disposed adjacent the passageways 49 so that gases generated at the electrodes 33 during operation of the assembly 30 pass through the slots 48 out of the top of the assembly 30. The copper bars 34 which mount the electrode elements 33 abut the top of the insert 47 and cooperate with the insert 47 to properly position the electrodes 33 within the volumes 32.

In order to support the insert 47 in proper position within the chimney 45, end flanges 51 may be provided on the insert 47, as well as an interior support 52 within the chimney 45. A central cutout 53 formed in the insert 47 straddles the support 52, and then abuts the support 52 when the insert 47 is lowered into proper position. At the same time the flanges 51 abut the top portion 54 of opposite side walls of the chimney 45. Each flange 51 has an opening 55 formed therein for receipt of a tube associated with the aspirator system, as will be further described.

It is noted that the bottom of the insert 47 is defined by surface means for preventing the trapping of gas pockets by the insert 47. In the embodiment illustrated in the drawings, the bottom 57 of the insert 47 is beveled, slanting upwardly to the openings 48, so that no gas generated at the anodes 33 will be trapped.

Sealing of the chimney 45 to the membrane 31 can be accomplished in any suitable manner. For instance where the chimney 45 is formed from a fiberglass reinforced polyester resin, and the top mounting block 37 is formed from that same fiberglass reinforced polyester resin, a bond of the polyester resin (without fiberglass reinforcement) may be provided between the block 37 and the chimney 45, which bond provides excellent sealing over extended periods of time. Because of the compressive forces on the membrane 31 acting through rods 39, there will be no, or insignificant, leakage between the membrane 31 and the block 37.

The apparatus for electrically treating an ion containing liquid to remove ions from the liquid and concentrate them according to the present invention, utilizes a plurality of the cell assemblies 30 within a purifying tank 25, having a tank inlet 27 and outlet 28. Attention is specifically directed to FIGURES 8 and 9 in this regard. FIGURE 8 is taken along lines 8-8 of FIGURE 9 and in FIGURE 8 electrical connections of the cell assemblies 30 have been removed for clarity of illustration. In FIGURE 9 the aspirator system has been removed for clarity of illustration.

Means are provided for mounting the membranes 31 of the cell assemblies 30 within the tank 25 so that liquid containing ions moves from the tank inlet 27 to the tank outlet 28 past the membranes 31 in operative association therewith. Ions from the liquid pass through the membranes 31 into the volumes 32, and are concentrated within the volumes 32. The mounting means may comprise a wide variety of structures, but in the embodiment in FIGURES 8 and 9 a pair of bars or like structures 60 are provided on the bottom of the tank 25 to straddle the bottom of each cell assembly 30 to position it, while one or more holding bars 61 are provided adjacent the top of the tank 25 for further positioning of the cells 30 in a different horizontal dimension than the horizontal dimension in which the bars 60 stabilize the cell assemblies 30. Though positively positioned within the tank 25, the cells 30 may thus be readily removed.

Preferably, the cell assemblies 30 are positioned within the tank 25 so that liquid flows around all sides of the cell assemblies 30 in passing from the inlet 27 to the outlet 28. In order to effect agitation and cooling of the liquid in tank 25 to maximize efficient ion transfer at the membranes 31, means may be provided for introducing gas into the liquid within the tank 25. Such gas introduction means may take the form of a plurality of air spargers 64 (see FIGURE 8) disposed adjacent the bottom of the tank 25 between membrane

0060091

assemblies 30 and between the membrane assemblies 30 and some walls of the tank 25. Air may be supplied through a header 65 from a compressor 66 to the spargers 64, or in any other suitable manner. The gas introduction is of sufficient amount and under efficient pressure to effect relatively violent agitation of the liquid within the tank 25 which, combined with the positioning of the cell assemblies 30 as illustrated in FIGURE 9, effects flow of liquid around all sides of each of the assemblies 30. This flow insures that layering of ion-depleted liquid does not occur at the membrane 31 exteriors, and enhances cooling of the cell assemblies 30, particularly the electrolyte within the chimneys 45. The apparatus is operated so that the height H of the liquid within the tank 25 is greater than the operative height of the liquid within the membranes 31, although less than the height of the chimneys 45 (see FIGURE 8).

In use, preferably the tank 25 is mounted vertically above the rinse tank 10, or the like, with which it is associated, and a pump 68 is provided to pump the liquid from the rinse tank 10 or the like to the tank 25. Additionally, the liquid inlet pipe 27 to the tank has a terminating portion 69 thereof above the level H of liquid normally maintained in the tank 25, and the liquid outlet 28 from the tank 25 includes an open-top pipe 70, having the top thereof disposed just below the level H. In this way, should the pump 68 for any reason fail, or should the system for any reason become non-operational, only the level of liquid above the top of the pipe 70 can drain back to the rinse tank 10 through either the inlet 27 or the outlet 28. In this way the cell assemblies 30 always stay immersed in water, and pollution of the rinse tank 10 or the like will not occur.

Electrical connections of the assemblies 30 to a suitable power source 26 or the like may be provided in any desired manner. One preferred manner illustrated in FIGURE 9 utilizes first and second busbars 72, 73 disposed on opposite sides of the tank 25, exteriorly thereof, adjacent the top thereof. Wires 74 connect each of the electrodes 33 (the bars 34 associated therewith) to the busbar 72 while wires 75 connect each of the second electrode extensions 36' to the busbar 73. The wires 74 and 75, and their connection points to the electrodes 33, 36', respectively, are at all times maintained out of contact with the rinse water within tank 25.

A means for periodically withdrawing concentrated ion solution (usually anolyte) from the membrane interior volumes 32 without interrupting operation of the apparatus 20, is illustrated in FIGURES 7 and 8. This apparatus includes a tube 80, such as a rigid glass tube, disposed in operative communication with a membrane interior volume 32, a flexible conduit 81 or like conduit for connecting the tube 80 to a common header 82 or the like, and an aspirator system, illustrated generally at 83. Preferably the tube 80 is disposed in the chimney 45 of a cell assembly 30, and has a beveled bottom portion 84 terminating in a bottom tip 85 which may abut the block 37 (or like interface structure provided between the chimney 45 and membrane 31).

The aspirator system 83 includes a substantially air-tight container (e.g. plastic container) 85 having a small opening 86 defined in a top portion thereof, a first conduit 87 leading from the header 82 to the container top portion 88, and opening into the container 85 interior; a venturi 89; and a second flexible conduit 90 leading from the container top portion 88 (and opening into the container 85) to the venturi 89 and positioned with respect to the venturi 89 so that when liquid flows through the venturi 89 a suction is drawn on the second conduit 90. During operation, the container 85 is positioned so that it is vertically below the chimney 45 of the cell assemblies 30, if not below the entire cell assemblies 30.

In order to provide simple, efficient operation of the aspirator system 83, preferably the tank inlet includes the main inlet pipe 27 and a branch pipe 92, with a manually actuated valve 93 being disposed in the branch pipe 92. The valve 93 provides for selective passage of liquid from the main inlet pipe 27 through the branch pipe 92, and the venturi 89 is disposed in the branch pipe 92. Both the inlet and branch pipes 27, 92 are connected to the pump 68, and the branch pipe 92 is also disposed so that the discharge end 94 (see FIGURE 8) thereof is above the normal level H of rinse water in the tank 25.

It is noted that the tube 80 passes through the opening 55 provided in one end plate 51 of the insert 47, extending between the insert 47 and the side wall of the chimney 45 into contact with the top compression plate 37. The header 82 (see FIGURE 8) is preferably mounted at one side of the tank 25, above the tank, by supports 96 or the like, so that the lengths of the flexible conduits 81 can be minimized.

The apparatus according to the present invention can be utilized for a wide variety of functions. It is particularly applicable, however, for electrolytically treating an ion containing liquid, such as chromium rinse water from chromium plating operations.  For instance the apparatus according to the invention is capable of simply and efficiently recovering hexavalent chromium and other desirable anions from the rinse water, the recovered chromic acid (with sulfuric acid) being reuseable or salable on the open market, and being produced so that it is less expensive than if purchased on the open market. At the same time the substantial cost of sludge removal and disposal are substantially eliminated, allowing compliance with all applicable environmental requirements.  The system additionally runs by itself continually, with no skilled labor or analyses being required, and the membranes 31 being capable of functioning for many months without maintenance, clogging, fouling, or the like.  The number of cell assemblies 30 utilized can be varied depending upon requirements so that the costs of the system are minimized, as well as the floor space required.  The apparatus is capable of operating with very dilute solutions (e.g. as low as 5 parts per million chromium) and still concentrate it to 10 to 15 ounces per gallon, or more, so that it is reuseable in the chromium plating bath.

Exemplary apparatus according to the present invention having been described, exemplary methods of utilization thereof will now be set forth.  Although the methodology will be described with particular reference to chromium, it is readily apparent that the general method is equally utilizable with other materials and systems.

A purifying tank 25 is disposed above a first rinse tank 10 of a chromium plating system. Rinse water from the tank 10 is continuously pumped by pump 68 from the tank 10 to the inlet 27 for the tank 25, and returns through outlet 28 and settling tank 21 to the rinse tank 10. A plurality of ion transfer membranes 31, in the form of integral cell assemblies 30, are disposed within the tank 25, as illustrated in FIGURE 9.

The rinse water is circulated around and past the ion transfer membranes 31 so that it comes into ion transfer contact with the membranes 31. To facilitate this, gas may be introduced through spargers 64 into the bottom of tank 25 to violently agitate the rinse water to facilitate cooling and to maximize sufficient ion transfer at the membranes 31. The membrane assemblies 30 preferably include chimneys 45 and the level H of rinse water is maintained in contact with the chimneys 45, above the tops of the membranes 31.

Electrical current from a suitable DC power source 26 is supplied to the electrodes 33, 36 - as through busbars 72, 73 - to effect transfer of metal ions from the rinse water to the volumes 32 defined by the membranes. Anions in the rinse water pass through the open areas of cathode 36, through the membrane 31, and toward the anode sections 33 disposed within interior volumes 32 of membrane 31. The concentration of chromium ions in the rinse water is thus decreased while the concentration of hexavalent chromium in the volumes 32 is increased. As long as the pH of the rinse water being treated is greater than about two, no significant reduction of hexavalent chromium will take place at the cathode 36.

Periodically concentrated solution (anolyte comprising chromic acid and sulfuric acid) is removed from the volumes 32 without interrupting operation. This is accomplished by an operator opening manual valve 93 to allow liquid flow through branch pipe 92 to discharge through open end 94 thereof into the tank 25. This liquid flow is through venturi 89. The operator then covers the small opening 86 in the top portion 88 of container 85 until the suction drawn by the venturi 89 evacuates the gas from container 85 and supplies a suction through conduit 87, header 82, etcetera to the anolyte within the chimneys 45 of each of the cell assemblies 30. The anolyte is withdrawn through the beveled bottom 84 of the tubes 80 by the suction effect, and a siphon is initiated since the tube 80 is vertically above the container 85. Once the siphoning is initiated, the operator removes his finger from the opening 86 and walks away. The siphoning action will continue until all of the liquid is withdrawn from the chimney 45 and the tube 80 starts to draw air. At that time the siphon is automatically broken, and siphoning will not continue until reinitiated even if the valve 93 is left open. At some subsequent time, at his leisure, the operator will notice that the container 85 is no longer filling with chromic acid, and will turn the valve 93 off.

The anolyte head volume reducing insert 47 ensures that the anolyte concentration is not too diluted. A higher head than can be maintained at equilibrium is osmotically pumped up within the chimney 45 after anolyte removal, or at any time when the anolyte concentration is too low. After equilibrium is reached the extra head is not present. By minimizing the volume of anolyte withdrawn at each withdrawal, the assemblies 30 will only have reduced efficiency for a small period of time after each withdrawal operation.

Periodically it is necessary to make up for evaporation of water in the chromium plating system. With particular reference to FIGURE 1, this is accomplished by running fresh water in path B into the first rinse tank 10. This water is circulated from the first rinse tank 10 over the weir box 14 (so that no backflow takes place) into the rinse tank 11, and then circulates from rinse tank 11 over weir 15 into third rinse tank 12, having the highest concentration of chromium, again no backflow taking place. Subsequently the pump 16 is manually operated to pump the necessary amount of make-up liquid from third rinse tank 12 to chromium bath 13, and any necessary chromium is added in order to maintain the desired concentration in bath 13. The pumping through pump 16 also takes place without backflow.

It will thus be seen that according to the present invention an improved method and apparatus have been provided particularly adapted for electrolytically treating an ion containing liquid.

CLAIMS:

1. Apparatus for electrolytically treating an ion containing liquid to remove ions from the liquid and concentrate them, said apparatus comprising: a tank having an inlet and an outlet; and an ion transfer membrane enclosing a volume and having a first electrode disposed in the volume enclosed thereby, and a second electrode disposed outside the volume enclosed thereby in close proximity therewith; characterized by: means for mounting a plurality of said membranes within said tank so that liquid containing ions moves from said tank inlet to said tank outlet past said membranes, in operative association therewith, with ions from the liquid passing through the membranes into the volumes enclosed thereby, and concentrated therewithin.

2. Apparatus as recited in claim 1 further characterized in that said mounting means mount said membranes within said tank so that liquid flows in contact with all sides of said membranes as it flows from the tank inlet to the tank outlet; and further characterized by means for introducing gas into the liquid within said tank to effect agitation and cooling of the liquid to maximize efficient ion transfer at said membranes.

3. Apparatus as recited in claim 2 further characterized in that said gas introduction means comprise a plurality of air spargers disposed adjacent the bottom of said tank and extending between membranes and between said membranes and some walls of the tank.

4. Apparatus as recited in any one of claims 1 to 3 further characterized in that said liquid inlet to said tank introduces liquid into said tank above the level of liquid normally maintained in said tank, and further characterized in that said liquid outlet from said tank comprises an open-top pipe having the top thereof disposed just below the level of liquid normally maintained in said tank.

5. Apparatus as recited in any one of claims 1 to 4 further characterized by an electrolytic cell structure mounting each said membrane and associated electrodes into an integral unit; and further characterized in that said means for mounting said membranes within said tank comprises a pair of structures for each integral unit mounted on the bottom of said tank for stablizing the position of said units within said tank, while allowing ready removal thereof; and further characterized by first and second busbars located on opposite sides of said tank, and means for connecting said first busbar to all the electrodes located within the volumes defined by said membranes, and for connecting said second busbar to all electrodes located exteriorly of the volumes defined by said membranes.

6. A method of purifying rinse water from an electrolytic metal plating process, such as chromium plating, utilizing a purifying tank separate from one or more rinse water tanks, said method comprising the step of: (a) pumping rinse water from the rinse water tanks to the purifying tank, discharging the rinse water into the purifying tank; and characterized by utilizing a plurality of ion transfer membranes defining volumes within the tank with electrodes disposed interiorly and exteriorly of the volumes defined by the membranes, and the steps of: (b) circulating the rinse water around and past the plurality of ion transfer membranes so that the rinse water comes in ion transfer contact with the membranes; (c) supplying electrical current to the electrodes associated with the membranes to effect transfer of metal ions from the rinse water to the volumes defined by the membranes to decrease the concentration of metal ions in the rinse water and increase the concentration of metal ions in the volumes defined by the membranes; and (d) withdrawing the treated rinse water from the purifying tank and ultimately returning it to the rinse water tanks.

7. A method as recited in claim 6 further characterized in that step (a) is accomplished by discharging the rinse water into the purifying tank from a position above the purifying tank so that should pumping cease discharge of rinse water from the purifying tank will cease; and further characterized in that step (d) is accomplished by withdrawing treated rinse water from the purifying tank at a point just below the normal level of liquid maintained in the tank so that the purifying tank may only drain a small amount should discharge of rinse water into the tank cease.

or claim 7

8. A method as recited in claim 6/further characterized in that step (b) is accomplished by introducing gas into the liquid in the purifying tank to cause the liquid to agitate violently to facilitate cooling, and to maximize efficient ion transfer at the membranes; and providing the discharge into and withdrawal from the purifying tank at opposite ends of the tank; and disposing the membranes in planes substantially perpendicular to a straight line between the discharge into and withdrawal from the purifying tank, and spaced from the tank side walls.

9. A method as recited in any one of claims/ 6 to 8 further characterized by periodically withdrawing concentrated solution from the volumes defined by the membranes, without interrupting operation, by: operatively connecting each membrane interior volume to an aspirator; and periodically initiating operation of the aspirator to withdraw a desired amount of concentrated solution from the volumes defined by the membranes and then automatically stop.

10. Apparatus as recited in any one of claims 1 to 5 further characterized by means for periodically withdrawing from the membrane- interior volumes concentrated ion solution without interrupting operation of said apparatus, said means comprising a tube disposed in operative communication with each membrane interior volume; means for connecting said tubes to a common header; and an aspirator system including a container for concentrated ion solution withdrawn from the membrane interior volumes, operatively connected to said header.

*Fig.1*

*Fig.2*

*Fig.3*

Fig. A

_Fig.5_

_Fig.8_

_Fig. 6_

Fig.7

Fig.9

DC POWER SOURCE

0060091